# EUROPÄISCHE PATENTSCHRIFT

(11) **EP 2 960 069 B1**
(45) Veröffentlichungstag und Bekanntmachung des Hinweises auf die Patenterteilung: **14.03.2018**
(21) Anmeldenummer: 15001902.4
(22) Anmeldetag: 26.06.2015
(51) Int. Cl.: B32B 33/00

(54) **DEKORSYSTEM FÜR EINEN BODEN-, WAND- ODER DECKENBELAG ODER FÜR EIN MÖBELBAUTEIL**
DECORATIVE SYSTEM FOR A FLOOR, WALL OR CEILING LINING OR FOR A FURNITURE COMPONENT
SYSTEME DE DECOR POUR UN REVETEMENT DE SOL, DE MUR OU DE PLAFOND OU POUR UN COMPOSANT DE MEUBLE

(30) Priorität: 26.06.2014 DE 102014009273
(43) Veröffentlichungstag der Anmeldung: 30.12.2015
(73) Patentinhaber: Parador GmbH, 48653 Coesfeld (DE)
(72) Erfinder: Petersen, Frank, 48653 Coesfeld (DE); Verstegge, Christian, 48599 Gronau (DE)
(74) Vertreter: Von Rohr Patentanwälte Partnerschaft mbB

(56) Entgegenhaltungen:
- EP-A1- 0 988 967
- EP-A1- 2 537 597
- EP-A1- 2 910 708
- EP-A1- 2 927 018
- WO-A1-03/095202
- WO-A1-2015/033143
- WO-A1-2015/057153
- WO-A1-2015/060778
- DE-U1- 20 317 527
- GB-A- 2 476 808
- US-A1- 2009 155 612

## Beschreibung

Die Erfindung betrifft ein Dekorsystem für einen Boden-, Wand oder Deckenbelag oder für ein Möbelbauteil gemäß dem Oberbegriff von Anspruch 1. Darüber hinaus betrifft die vorliegende Erfindung einen Boden-, Wand- oder Deckenbelag oder ein Möbelbauteil mit einer Mehrzahl von flächig miteinander verbundenen Platten, wie Bodenbelags-, Wandverkleidungs- oder Deckenverkleidungsplatten oder Möbelbauteilplatten gemäß Anspruch 11.

Um nach einer Beschädigung der Oberfläche eines Plattenbelages oder eines Möbelbauteils ein hochwertiges intaktes Erscheinungsbild des Untergrundes wiederherzustellen, ist es oft erforderlich, eine beschädigte Bodenbelags-, Wand- oder Deckenverkleidungsplatte oder die beschädigte Möbelbauteilplatte auszubauen und durch eine neue Platte zu ersetzen, wobei regelmäßig der gesamte Plattenbelag bzw. Plattenverbund ausgetauscht werden muss. Hieraus resultiert ein hoher Aufwand mit entsprechend honen Kosten.

Zur individuellen Gestaltung oder nachträglichen Aufwertung von Boden-, Wand- oder Deckenbelägen oder Möbeln sind aus dem Stand der Technik Dekorklebefolien bekannt, die ein bestimmtes Foliendekor aufweisen und die sich in der Regel selbstklebend auf einen Untergrund aufkleben lassen. Solche Dekorklebefolien sind mit unterschiedlichsten Foliendekoren erhältlich, beispielsweise unter dem Markennamen d-c-fix® der Konrad Hornschuch AG, Weißbach, Deutschland. Wenngleich die in Rede stehenden Dekorklebefolien aufgrund der Vielzahl verfügbarer unterschiedlicher Foliendekore grundsätzlich zur individuellen nachträglichen grafischen Umgestaltung von beliebigen Untergründen, wie Boden-, Wand- oder Deckenbelägen oder Möbelbauteilen, geeignet sind, weisen die bekannten Dekorklebefolien schlechte Nutzungseigenschaften auf, was beispielsweise bei Verwendung im Bodenbereich auf eine geringe Abriebfestigkeit der Folien zurückzuführen ist. Grenzt das Foliendekor unmittelbar an ein Plattendekor des Untergrundes an, wird die Dekorklebefolie zumeist in auffälliger Weise wahrgenommen, was zu einem geringwertigen Erscheinungsbild des Untergrundes führen kann. Zudem wirkt das Dekorbild solcher Folien oft geringwertiger als das Dekorbild des Untergrundes. Nach dem Aufkleben auf einen Untergrund lassen sich die bekannten Folien in der Regel auch nur schlecht von dem Untergrund ablösen und rückstandsfrei entfernen. Vor dem Aufkleben muss die Dekorklebefolie zudem entsprechend zugeschnitten werden, was manuell erfolgt und im aufgeklebten Zustand der Folie dazu führt, dass die Folienränder über Kanten und Ränder des Untergrundes überstehen und die Folie als solche sehr leicht von einem Betrachter als Mittel zur nachträglichen Oberflächengestaltung wahrgenommen wird.

Eine weitere bekannte Technik ist das Veredeln von beispielsweise Wandbelägen mit Wandtattoos. Hierbei kommt eine unifarbene oder bedruckte Klebefolie, welche unterschiedliche Foliendekore aufweisen kann, die beispielsweise Figuren oder Schriften zeigen, zum Einsatz. Auch diese Folien weisen schlechte Nutzungseigenschaften auf, beispielsweise eine geringe Abriebfestigkeit und Rutschhemmung. Für den Einsatz auf Bodenbelägen sind solche Wandtattoos nicht geeignet. Zumeist weisen solche Folien in der Regel einen größeren transparenten Flächenbereich auf, der aufgrund von Lichtreflexionen bei bestimmten Lichtverhältnissen ebenfalls sehr leicht wahrgenommen wird. Das kann wiederum zu einem geringwertigen Erscheinungsbild der mit Wandtattoos beklebten Wandbeläge führen.

Ein Dekorsystem der eingangs genannten Art ist aus der DE 203 17 527 U1 bekannt. Das Dekorsystem weist ein Fußbodenpaneel auf, das oberseitig mit einer bedruckten dekorativen Schicht versehen ist. Darüber hinaus ist ein Overlay vorgesehen, das aus einem Träger mit einem thermoaushärtenden Harz besteht. In der Oberseite des Overlays sind eingedrückte Vertiefungen gebildet, in denen Komponenten, beispielsweise Farbprodukte, angebracht sind. Die Vertiefungen folgen dabei dem Motiv der dekorativen Schicht.

Aus der US 2009/0155612 A1 geht ein Baupaneel mit einem Kern und einer Oberflächenbeschichtung hervor, wobei der Kern Holzfasern und die Oberflächenbeschichtung neben Holzfasern auch ein Bindemittel und Verschleißpartikel umfasst. Die WO 03/095202 betrifft ein Dekorsystem mit einer Platte aus einem HDF-Material. Auf einer Oberseite der Platte ist eine Dekorschicht angebracht. Die Dekorschicht weist eine graphische Abbildung eines zu imitierenden Werkstoffs auf. Auf der Dekorschicht ist eine transparente Deckschicht aus einem harzimprägnierten Overlay vorgesehen. In das Overlay ist eine Oberflächenstruktur eingeprägt, die der Oberfläche des Werkstoffs nachempfunden ist. Diese Offenbarung offenbart die Merkmale des Oberbegriffs des Anspruchs 1. Aufgabe der vorliegenden Erfindung ist es, ein Dekorsystem der eingangs genannten Art zur Verfügung zu stellen, das es in einfacher Weise zulässt, das äußere Erscheinungsbild der Oberfläche von Boden-, Wand- oder Deckenbelägen oder von Möbeln individuell selbst zu gestalten und/oder nachträglich aufzuwerten, wobei die Oberfläche als besonders hochwertig und ästhetisch ansprechend wahrgenommen werden soll. Im Übrigen sollen sich der Boden-, Wand- oder Deckenbelag oder das Möbelbauteil durch verbesserte Nutzungseigenschaften der Oberfläche, insbesondere eine höhere Abriebfestigkeit und/oder eine einfache Möglichkeit der nachträglichen erneuten Veränderung des Erscheinungsbildes der Oberfläche, auszeichnen. Der Erfindung liegt weiter die Aufgabe zugrunde, eine einfache Möglichkeit zu schaffen, beschädigten Oberflächen bei geringem Aufwand und geringen Kosten wieder ein hochwertiges Erscheinungsbild zu verleihen.

Die vorgenannte Aufgabe wird durch ein Dekorsystem mit den Merkmalen von Anspruch 1 oder durch einen Boden-, Wand- oder Deckenbelag oder ein Möbelbauteil mit den Merkmalen von Anspruch 11 gelöst.

Das erfindungsgemäße Dekorsystem weist wenigstens eine Platte, vorzugsweise eine Bodenbelags-, Wandverkleidungs- oder Deckenverkleidungsplatte, insbesondere ein Paneel- oder Dielenelement, oder eine Möbelbauteilplatte, und wenigstens eine Dekorklebefolie auf. Die Platte weist ein Plattendekor und die Dekorklebefolie ein Foliendekor auf, wobei das Foliendekor erfindungsgemäß zumindest bereichsweise und zumindest in einem Dekormerkmal dekorgleich mit dem Plattendekor ist. Bei einem Boden-, Wand- oder Deckenbelag oder Möbelbauteil gemäß Anspruch 1 ist eine Mehrzahl von flächig miteinander verbundenen Platten, wie Bodenbelags-, Wandverkleidungs- oder Deckenverkleidungsplatten oder Möbelbauteilplatten, vorgesehen, wobei wenigstens eine Platte, vorzugsweise vollflächig, mit einer Dekorklebefolie beklebt ist und wobei ein Plattendekor von wenigstens einer Platte des Belages und/oder des Möbelbauteils und ein Foliendekor der Dekorklebefolie zumindest bereichsweise, d.h. zumindest über einen Teil der sichtbaren Flächen der Dekorklebefolie, und zumindest in einem Dekormerkmal dekorgleich sind. Der Begriff "Dekor" betrifft erfindungsgemäß das äußere Erscheinungsbild bzw. eine dekorative Oberfläche, das Design oder die optische Gestaltung. "Dekorgleich" im Sinne der Erfindung betrifft ein im Wesentlichen übereinstimmendes Erscheinungsbild beim Betrachter, bezogen auf zumindest ein Dekormerkmal, wie Farbe, Muster oder Oberflächenstruktur.

Der Erfindung liegt der Grundgedanke zugrunde, einen Untergrund, beispielsweise Fußbodenpaneele oder eine Möbelfront, nachträglich mit einer selbstklebenden Folie mit dekorativer Oberfläche dekorgleich zum Plattendekor des Untergrunds auszustatten. Die Dekorgleichheit muss dabei nicht für die gesamte sichtbare Oberfläche bzw. Grundfläche der Dekorklebefolie vorliegen. Durch die Dekorgleichheit wird sichergestellt, dass die Dekorklebefolie als solche wenig oder gar nicht wahrgenommen wird. Dies ist insbesondere dann von Vorteil, wenn die Dekorklebefolie eingesetzt wird, um optische Beeinträchtigungen des Erscheinungsbildes eines Untergrundes durch Beschädigungen der Oberfläche des Untergrundes zu beseitigen, indem die Dekorklebefolie auf die beschädigten Bereiche des Untergrundes aufgeklebt wird. Eine Erneuerung des Fußbodens durch Plattenaustausch ist nicht erforderlich.

Je nach Gestaltung des Foliendekors lassen sich gestalterische Effekte im Raum herstellen. In diesem Zusammenhang muss das Foliendekor der Dekorklebefolie nicht über die gesamte sichtbare Fläche der Dekorklebefolie dekorgleich mit dem Plattendekor sein. Bereiche der Dekorklebefolie können ein anderes Dekor aufweisen, um bestimmte grafische Gestaltungselemente auf einen Untergrund aufzubringen. Eine optische Aufwertung, beispielsweise eines Fußbodens, lässt sich dadurch erreichen, dass Gestaltungselemente im Bereich der Dekorklebefolie mit einem vom Plattendekor abweichenden Dekor auf die Fußbodendielen aufgeklebt werden, um das Erscheinungsbild entsprechend den individuellen Wünschen zu verändern. Beispielsweise kann bei Dunkelheit durch den Einsatz von Dekorklebefolien mit aufgedruckter fluoreszierender Farbe ein Leuchteffekt im Raum entstehen. Ebenso lassen sich grafische Themenlandschaften generieren, die sich aufgrund der Dekorgleichheit harmonisch in den Raum einpassen. Weiter beispielsweise lassen sich durch ein entsprechendes Foliendekor klassische Spiellandschaften für Kinder erzeugen, wie "Mensch ärgere dich nicht"- oder "Twister"-Spielflächen oder auch Spielstraßen. Auch sind Dekore möglich, die sich mit Kreide bemalen lassen. Durch entsprechende Ausgestaltung der Bereiche des Foliendekors, die nicht dekorgleich mit dem Plattendekor sind, kann die Möglichkeit geschaffen werden, diese Dekorbereiche selbst zu gestalten. Foliendekore mit aufgedruckten thematischen Bodentattoos oder bekannten Persönlichkeiten aus Sport, TV und Musik sind ebenfalls möglich. Durch das Aufbringen von thermoaktiven Farben auf der Dekorklebefolie ist eine Anzeige der Temperatur des Untergrundes möglich. Bei Verwendung des erfindungsgemäßen Dekorsystems für einen Bodenbelag mit darunter befindlicher Fußbodenheizung lässt sich so beispielsweise eine "Wohlfühltemperatur" in einfacher Weise ermitteln und anzeigen. Ebenfalls ist der Einsatz von Geruchslack oder anderen Effektlacken, wie Gold- und Silberlacken, denkbar.

"Dekormerkmale" im Sinne der Erfindung können insbesondere visuell bzw. optisch erfassbare Bild- bzw. Gestaltungsmerkmale sein, beispielsweise eine (farbige) Bilddarstellung einer bestimmten Oberfläche. Ganz allgemein kann ein "Dekormerkmal" wenigstens eine Farbe, ein Muster oder eine Oberflächenstruktur einer Dekoroberfläche sein. In diesem Zusammenhang ist es bei einer bevorzugten Ausführungsform der Erfindung vorgesehen, dass das Plattendekor und das Foliendekor zumindest bereichsweise, d.h. über bestimmte Flächenbereiche der Dekorklebefolie, ein übereinstimmendes Dekorbild, d.h. eine übereinstimmende grafische Gestaltung einer bestimmten Oberfläche, aufweisen, insbesondere das Dekorbild einer Holzoberfläche. Eine "übereinstimmende" Gestaltung liegt dann vor, wenn beim Betrachter der mit der Dekorklebefolie beklebten Platte Unterschiede zwischen dem Plattendekor und dem Foliendekor visuell bei üblichem Betrachtungsabstand im Wesentlichen nicht wahrnehmbar sind. Farben und Farbverteilungen des Foliendekors können dann mit den Farben und Farbverteilungen des Plattendekors zumindest bereichsweise, d.h. über bestimmte Flächenbereiche der Dekorklebefolie, und zumindest im Wesentlichen übereinstimmen. Das Foliendekor entspricht beispielsweise einem Fußbodendekor oder einem Möbeldekor und ist somit in Farben und Farbverteilungen als dekorgleich mit dem Fußboden oder dem Möbel zu betrachten. Die Dekorklebefolie kann besonders bevorzugt ein Dekorbild einer Holzoberfläche aufweisen, welches zusätzlich mit Gestaltungselementen, wie Typographie oder Grafiken, ausgestattet sein kann.

Um in besonders hohem Maße sicherstellen zu können, dass ein Betrachter der mit der Dekorklebefolie beklebten Platte Unterschiede zwischen dem Plattendekor und dem Foliendekor nicht wahrnimmt, können das Foliendekor und das Plattendekor zumindest bereichsweise ein identisches Dekorbild aufweisen, insbesondere das Dekorbild einer Holzoberfläche. In diesem Fall ist es so, dass das Foliendekor und das Plattendekor zumindest über bestimmte Flächenbereiche der Dekorklebefolie ein identisches Dekorbild, d.h. ein identisches Muster, identische Farben bzw. eine identische Farbverteilung und/oder eine identische Oberflächenstruktur, aufweisen.

Das Foliendekor kann zumindest bereichsweise eine mit dem Plattendekor übereinstimmende, vorzugsweise identische Oberflächenstruktur bzw. Topographie aufweisen, insbesondere die Oberflächenstruktur einer Holzoberfläche. Damit wird eine starke Anpassung des Foliendekors an das Plattendekor erreicht mit der Wirkung, dass die Dekorklebefolie als solche wenig oder gar nicht wahrnehmbar ist und ein hochwertiges optisches Erscheinungsbild der beklebten Platte insbesondere in einem Plattenverbund gewährleistet wird. Durch das Aufbringen eines Strukturlacks ist es beispielsweise möglich, den haptischen Eindruck einer bestimmten Oberfläche eines Boden-, Wand- oder Deckenbelages oder eines Möbelbauteils nachzuahmen. Durch das Aufbringen eines 3D-Strukturlacks lassen sich mit aufgebrachter Dekorfolie auf einem Unterdruck haptische Veränderungen im Raum erzielen, die beispielsweise bei Sehbehinderung vor Gefahren wie Treppenabsätzen, Wänden oder Türdurchlässen warnen können.

Die Dekorklebefolie kann auch eine strukturlose, d.h. ebene, durchdrückbare Folienoberfläche aufweisen. Die Dekorklebefolie ist damit anpassungsfähig an die Struktur der Oberfläche der Platte, wobei ein dreidimensionaler Durchdrückeffekt auf die Folie angewendet werden kann, um in Abhängigkeit von der Stärke und der Richtung beim Durchdrücken der Folie unterschiedliche Oberflächenstrukturen des Plattendekors nachzubilden.

Das Foliendekor kann über wenigstens 10 %, vorzugsweise wenigstens 25 %, insbesondere wenigstens 40 %, der Grundfläche bzw. der sichtbaren Dekorfläche der Dekorklebefolie dekorgleich oder identisch mit dem Plattendekor sein. Dies trägt dazu bei, dass Übergänge zwischen der Dekorklebefolie und einem nichtbeklebten Plattenbereich nur wenig oder gar nicht wahrgenommen werden. Je höher der Anteil der dekorgleichen oder dekoridentischen Fläche der Klebefolie ist, desto mehr "verschmilzt" die Dekorklebefolie optisch mit den nichtbeklebten Bereichen des Untergrundes. Auch steht ein ausreichend großer Flächenanteil der Dekorklebefolie bzw. Bildanteil des Dekorbildes der Folie zur Verfügung, um vom Plattendekor abweichende Oberflächengestaltungen vorzusehen und damit individuellen Gestaltungsmöglichkeiten der Oberfläche eines Untergrundes Raum zu schaffen.

Bei einer Ausführungsform der Erfindung sind die Platte und die Dekorklebefolie formatgleich ausgebildet. Dies bezieht sich insbesondere auf eine begehbare bzw. sichtbare Oberfläche der Platte/Dekorklebefolie im Verbund der Platten. Da die Dekorklebefolie formatgleich passend zu der Platte ist, ergibt sich eine für den Endverbraucher einfache Möglichkeit, die Dekorklebefolie flächig passend auf eine Platte aufzukleben, wobei die Ränder der Dekorklebefolie seitlich nicht über die Platte überstehen, sondern mit den Plattenkanten abschließen. Durch Anpassen der Größe der Dekorklebefolie an unterschiedliche Plattenformate lässt sich sicherstellen, dass die aufgeklebte Folie eine darunter befindliche Platte 1:1 abdeckt. In einem Plattenverbund wird dann die Beklebung der Platte nicht oder lediglich geringfügig wahrgenommen, ohne das äußere Erscheinungsbild des Plattenverbundes zu stören. Besonders bevorzugt ist jedoch, dass die Dekorklebefolie und die Platte unterschiedliche Formate aufweisen, so dass für einen Anwender des Dekorsystems die Möglichkeit besteht, die Dekorklebefolie auf unterschiedliche Formate der Platte manuell zuzuschneiden.

Die bei dem erfindungsgemäßen Dekorsystem eingesetzte Dekorklebefolie lässt vorzugweise eine Verwendung auf Bodenbelägen zu und weist hierzu bestimmte Oberflächeneigenschaften auf, wie Kratzfestigkeit und Rutschhemmung. Vorzugsweise beträgt die Beständigkeit der Dekorklebefolie gegen Abrieb einer Abriebklasse nach DIN EN 13329 von wenigstens AC 1, vorzugsweise von wenigstens AC 2, weiter vorzugsweise von wenigstens AC 3 bis AC 4 oder sogar von AC 5. Die Abriebklasse wird ermittelt, indem ein Prüfkörper mit der Dekorklebefolie auf eine Prüfvorrichtung gespannt wird und mit Schmiergelpapier bespannte Reibräder auf die Dekorfolie einwirken. Nach jeweils 100 Umdrehungen wird der Prüfkörper auf Abrieb geprüft. Alle 200 Umdrehungen wird das Schmiergelpapier auf den Reibrädern gewechselt. Der Anfangsabriebpunkt (IP) ist der Punkt, an dem erstmals ein klar erkennbarer Durchrieb des Dekordrucks und/oder der Dekorklebefolie auftritt. In diesem Zusammenhang kann die Dekorklebefolie einen IP-Wert von größer 900, vorzugsweise von größer 1.800, weiter vorzugweise von größer 2.500 aufweisen. Der IP-Wert kann auch größer als 4.000 oder sogar größer als 6.500 sein. Bei einer besonders bevorzugten Ausführungsform entspricht die Abriebfestigkeit der Dekorklebefolie der Abriebfestigkeit der Plattenoberfläche. Die Dekorklebefolie kann damit eine Nutzungsklasse erhalten, die der des Untergrundes entspricht. Bei Einsatz eines oberflächlich aufzutragenden Strukturlacks der Dekorklebefolie kann ein gewisser Anteil an Korund beigemischt werden, um eine bestimmte Kratzfestigkeit und Rutschbeständigkeit zu erreichen.

Die Dekorklebefolie kann ein bedrucktes Papier, insbesondere ein Dekorpapier, eine Kunststofffolie und, vorzugsweise, eine Funktionsschicht auf dem bedruckten Papier, weiter vorzugsweise ausgebildet als Transparentfolie oder Lackschicht, aufweisen. Insbesondere kann die Dekorklebefolie eines oder mehrere Merkmale der in der DE 20 2013 003 421 U1 offenbarten Dekorselbstklebefolie aufweisen. Der Offenbarungsgehalt der DE 20 2013 003 421 U1 wird insbesondere im Hinblick auf die Ausbildung der Dekorselbstklebefolie voll umfänglich in den Offenbarungsgehalt dieser Schrift einbezogen. Besonders bevorzugt wird zur Herstellung der Dekorklebefolie ein bedrucktes, nicht vollständig durchimprägniertes Papier, ein sogenanntes Vorimprägnat, oder ein bedrucktes, vollständig durchimprägniertes Papier als Dekorpapier eingesetzt.

Das Bedrucken des Papiers für die Dekorklebefolie zum Aufbringen einer bestimmten dekorativen Oberfläche bzw. einer bestimmten (farbigen) Bilddarstellung erfolgt durch ein Digitaldruckverfahren. Eine Individualisierung ab Auflage 1 im Digitaldruckverfahren führt zu einem klaren Vorteil gegenüber marktbekannten vergleichbaren Folien, die nicht dekorgleich zum Untergrund ausgebildet sind. Mit der Möglichkeit des Digitaldrucks ist auch eine Personalisierung realisierbar, um ab Auflage 1 beispielsweise ein eigenes Foto aufdrucken zu lassen.

Um in einfacher Weise sicherzustellen, dass eine Platte und die Dekorklebefolie dekorgleich ausgebildet sind, können die Platte und die Dekorklebefolie grundsätzlich auch bedruckte Papiere aufweisen, die ein identisches Dekorbild zeigen. Das Plattendekor und das Foliendekor können beispielsweise durch Bedrucken von gleichen oder unterschiedlichen Dekorpapieren in einem Digitaldruckverfahren unter Verwendung desselben Bilddatensatzes erhältlich sein.

Für das Plattendekor einerseits und das Foliendekor andererseits können grundsätzlich auch identische Dekorpapiere eingesetzt werden, was die Dekorgleichheit in einfacher Weise gewährleistet und eine kostengünstige Fertigung des Dekorsystems ermöglicht.

Zur Herstellung eines Plattendekors kann ein bedrucktes Dekorpapier auf einen Träger der Platte, der beispielsweise aus einem Holzwerkstoff, einem Holzspanwerkstoff, einem Holzfaserwerkstoff und/oder einem Verbundwerkstoff auf Holz-, Kunststoff-, Zellstoff- und/oder Mineralstoffbasis besteht, weiter insbesondere auf eine HDF- oder MDF-Platte, unter Einwirkung von Druck und Wärme auflaminiert werden. Zur Verklebung des Dekorpapiers mit dem Träger kann ein übliches Imprägnierharz verwendet werden, das bei Trocknung und Zufuhr von Wärme vernetzt. Nach Verklebung mit dem Träger lässt sich das Dekorpapier von diesem nicht mehr ablösen.

Die Herstellung einer im Rahmen der Erfindung geeigneten Dekorklebefolie ist beispielsweise in dem Dokument 20 2013 003 421 U1 beschrieben. Auf den Offenbarungsgehalt der DE 20 2013 003421 U1 sowie der darin genannten Dokumente EP 1 036 881 B1 und DE 197 28 250 A1 wird voll umfänglich Bezug genommen.

Es versteht sich, dass in einem Boden-, Wand- oder Deckenbelag oder bei einem Möbelbauteil mit einer Mehrzahl von Platten nicht alle Platten ein identisch übereinstimmendes Plattendekor aufweisen müssen. Soll beispielsweise das optische Erscheinungsbild eines Holzbodens aus einer bestimmten Holzart erreicht werden, können wenigstens zwei Platten, vorzugsweise mehr als zwei Platten, unterschiedliche Holzdekore der gleichen Holzart aufweisen, die lediglich geringfügig voneinander abweichen, um das äußere Erscheinungsbild eines natürlichen Holzbodens unter Berücksichtigung der natürlichen Variationsbreite von Holzoberflächen einer bestimmten Holzart nachzuahmen. Dementsprechend kann das erfindungsgemäße Dekorsystem Dekorklebefolien mit unterschiedlichen Foliendekoren aufweisen, um eine Originaloberfläche des Untergrundes bezogen auf die Plattendekore des Untergrundes möglichst genau nachbilden zu können. Die unterschiedlichen Dekorklebefolien können dann bedarfsweise an unterschiedlichen Stellen im Plattenverbund auf die jeweiligen Platten aufgeklebt werden. Grundsätzlich ist es auch nicht erforderlich, dass eine auf eine Platte aufgeklebte Dekorklebefolie ein Foliendekor aufweist, das dekorgleich mit einem ursprünglichen Plattendekor dieser beklebten Platte ist. Wesentlich ist, dass das Foliendekor mit dem Plattendekor von wenigstens einer in dem Plattenverbund oder bei dem Möbelbauteil verwendeten Platte übereinstimmt.

Zur Lösung der eingangs genannten Aufgabe ist bei einer alternativen Ausführungsform des erfindungsgemäßen Dekorsystems gemäß Anspruch 10 vorgesehen, dass das Plattendekor und das Foliendekor mit unterschiedlichen Fertigungsverfahren erzeugt bzw. hergestellt sind. Besonders bevorzugt ist es so, dass das Plattendekor durch Bedrucken eines nicht beharzten bzw. nicht imprägnierten Dekorrohpapiers in einem analogen Tiefdruckverfahren oder in einem digitalen Druckverfahren erzeugt ist bzw. wird. Nach dem Bedrucken des Dekorrohpapiers erfolgt dann eine Imprägnierung mit einem geeigneten Imprägnierharz, wie beispielsweise Melaminharz. Anschließend wird das so erhaltene imprägnierte bedruckte Dekorrohpapier mit einem Plattenmaterial der Platte in einer Presse verpresst. Die Herstellung von Dekorrohpapieren ist beispielsweise in der EP 1 036 881 B1 oder in der DE 197 28 250 A1 beschrieben.

Weiter vorzugsweise wird das Foliendekor durch Bedrucken eines nicht vollständig oder vollständig durchimprägnierten Dekorpapiers in einem digitalen Druckverfahren erzeugt. Es können nicht vollständig durchimprägnierte Papiere, sogenannten Vorimprägnate, als Dekorpapier für das Foliendekor verwendet werden. Nach dem Bedrucken erfolgt vorzugsweise keine weitere Imprägnierung des bedruckten Vorimprägnats. Das bedruckte Vorimprägnat oder ein bedrucktes vollständig durchimprägniertes Papier kann mit einer Funktionsschicht beschichtet werden, beispielsweise mit einer Lackschicht (Siegelschicht). Alternativ kann auch eine transparente Folie aufgebracht werden. Dadurch kommt es zur Vergütung der Oberfläche.

Durch Einsatz unterschiedlicher Fertigungsverfahren unter Verwendung unterschiedlicher Dekorpapiere für das Plattendekor und das Foliendekor ist es möglich, das Foliendekor in einfacher Weise an ein bestimmtes gewünschtes äußeres Erscheinungsbild der Oberfläche anzupassen und/oder nachträglich zu verändern. Beispielsweise ist es durch Digitaldruck in einfacher Weise möglich, das Foliendekor an ein gealtertes und aufgrund von Umgebungseinflüssen, wie UV-Strahlung oder mechanische Beschädigung, gegenüber einem Originaldekor verändertes Plattendekor anzupassen. Damit kann sichergestellt werden, dass die Dekorklebefolie als solche wenig oder gar nicht wahrgenommen wird, wenn sie auf eine Platte oder mehrere Platten im Plattenverbund aufgeklebt wird. Das Dekorbild des Foliendekors kann dabei so angepasst werden, dass es zumindest bereichsweise und zumindest in einem Dekormerkmal dekorgleich mit einem beispielsweise gealterten Plattendekor ist. Grundsätzlich lässt der Digitaldruck auch eine einfache Veränderung des Foliendekors zu, um beispielsweise einem Bodenbelag ein neues Design, mit Mustern oder dergleichen, zu verleihen.

Ausführungsbeispiele der Erfindung sind in der Zeichnung dargestellt. Die in der Zeichnung dargestellten Merkmale und die oben beschriebenen Merkmale können bedarfsweise miteinander kombiniert werden, auch wenn dies nicht ausdrücklich beschrieben ist. In der Zeichnung zeigen:
- Fig. 1: eine Draufsicht auf einen erfindungsgemäßen Bodenbelag gemäß einer ersten Ausführungsform der Erfindung,
- Fig. 2: eine perspektivische Ansicht einer Dekorklebefolie zum Aufkleben auf den in Fig. 1 gezeigten Bodenbelag,
- Fig. 3: eine Draufsicht auf einen erfindungsgemäßen Bodenbelag gemäß einer weiteren Ausführungsform der Erfindung und
- Fig. 4: eine perspektivische Ansicht einer weiteren Dekorklebefolie zum Aufkleben auf den in Fig. 3 gezeigten Bodenbelag.

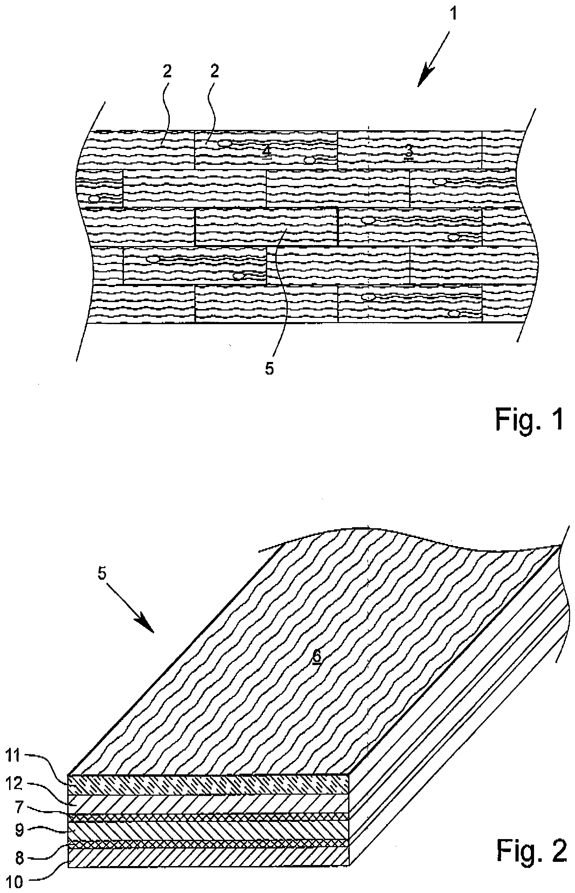

In Fig. 1 ist ein Bodenbelag 1 gezeigt, der eine Mehrzahl von flächig miteinander verbundenen Bodenbelagsplatten 2 aufweist. Die Bodenbelagsplatten 2 weisen bei dem gezeigten Ausführungsbeispiel zwei unterschiedliche Plattendekore 3, 4 auf. Bei den Plattendekoren 3, 4 handelt es sich um Holzdekore einer bestimmten Holzart. Die Bodenbelagsplatten 2 sind mit mehreren unterschiedlichen Plattendekoren 3,4 versehen, um das natürliche Erscheinungsbild eines Holzbodens einer bestimmten Holzart nachzuahmen. Es versteht sich, dass der Bodenbelag 1 auch lediglich Bodenbelagsplatten 2 aufweisen kann, die ein gleiches Plattendekor 3, 4 oder mehr als zwei unterschiedliche Dekore zeigen, um dem natürlichen Aussehen von Holzoberflächen im Plattenverbund möglichst weit entsprechen zu können.

Bei dem gezeigten Bodenbelag 1 ist beispielhaft lediglich eine Bodenbelagsplatte 2 vollflächig mit einer in Fig. 2 gezeigten Dekorklebefolie 5 beklebt, wobei die Dekorklebefolie 5 ein Foliendekor 6 aufweist, das mit dem Plattendekor 3 des Bodenbelages 1 dekorgleich ist. Mit anderen Worten ausgedrückt weisen das Foliendekor 6 und das Plattendekor 3 ein übereinstimmendes, vorzugsweise identisches, Dekorbild einer Holzoberfläche bzw. ein übereinstimmendes, vorzugsweise identisches, Holzdekor auf.

Zur Herstellung der Bodenbelagsplatten 2 mit den Plattendekoren 3, 4 werden im Tiefdruckverfahren bedruckte Dekorpapiere auf einen Träger der Bodenbelagsplatten 2 aus einem Plattenmaterial unter Einwirkung von Druck und Wärme auflaminiert. Zur Verklebung des Dekorpapiers mit dem endgültigen Träger wird ein übliches Imprägnierharz verwendet.

Wie sich aus Fig. 2 ergibt, weist die Dekorklebefolie 5 einen mehrschichtigen Aufbau auf, wobei die Schichten 7, 8 Klebemittelschichten bezeichnen und die Schicht 9 einen Kunststofffolienträger. Auf der Unterseite weist die Dekorklebefolie 5 eine Schicht 10 auf, bei der es sich um eine Decklage handeln kann, die entfernt wird, wenn die Dekorklebefolie 5 zur Dekoration auf eine Bodenbelagsplatte 2 aufgeklebt wird. Auf der Ober- bzw. Ansichtsseite der Dekorklebefolie 5 ist eine Schicht 11 vorgesehen, bei der es sich um eine Funktionsschicht handeln kann, beispielsweise eine Lackschicht zur Oberflächenvergütung und Härtung der Oberfläche. Ein Dekorpapier 12 der Dekorklebefolie 5 stimmt im Hinblick auf das äußere Erscheinungsbild bzw. Dekorbild mit dem Dekorbild eines auf die Bodenbelagsplatte 2 zur Herstellung des Plattendekors 3 auflaminierten Dekorpapiers überein. Dadurch wird in einfacher Weise erreicht, dass das Plattendekor 3 und das Foliendekor 6 dekorgleich sind. Grundsätzlich ist es aber auch möglich, dass das Dekorbild des Dekorpapiers 12 der Dekorklebefolie 5 und das Dekorbild des Dekorpapiers, dass das Plattendekor 3 bildet, nicht nur im Wesentlichen übereinstimmen, sondern identisch sind, zumindest bereichsweise, d.h. bereichsweise ein identisches Muster und/oder eine identische Farbe oder Farbverteilung und/oder eine identische Oberflächenstruktur aufweisen.

Durch Verwendung der gezeigten Dekorklebefolie 5 ist es in einfacher Weise möglich, Beschädigungen des Plattendekors 3 einer Bodenbelagsplatte 2 durch Überkleben mit der Dekorklebefolie 5 zu beseitigen. Hierbei weist die Dekorklebefolie 5 vorzugsweis das gleiche Format wie die Bodenbelagsplatten 2 auf, was das flächenbündige Aufkleben der Dekorklebefolie 5 auf die Bodenbelagsplatte 2 vereinfacht.

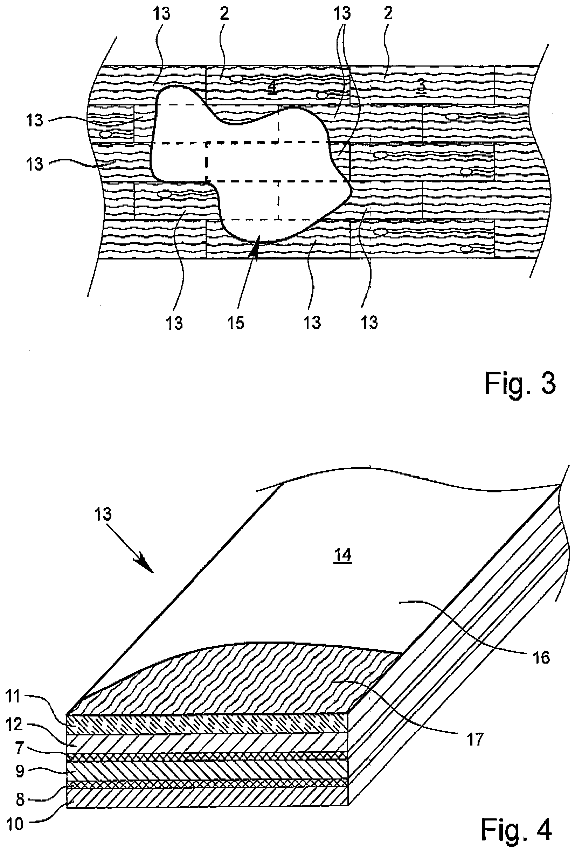

Wie sich aus den Figuren 3 und 4 ergibt, können auch mehrere Dekorklebefolien 13 mit unterschiedlichen Foliendekoren 14 eingesetzt werden, um auf einem Untergrund ein bestimmtes Folienbild 15 zu erzeugen. Jedes Foliendekor 14 weist Bereiche 16 auf, die erkennbar von den Plattendekoren 3, 4 abweichen. Insbesondere weisen die Dekorklebefolien 13 in den Bereichen 16 kein Holzdekor auf. In den Bereichen 17 dagegen entspricht das Foliendekor 14 dem Plattendekor 3. Gemäß Fig. 3 werden insgesamt acht verschiedene Dekorklebefolien 13 verwendet, um das Folienbild 15 zu erzeugen. Es versteht sich, dass die Anzahl der verwendeten Dekorklebefolien 13 und/oder das Aussehen der Foliendekore 14 von der in Fig. 3 gezeigten Ausführungsform abweichen können.

Nicht dargestellt ist im Übrigen, dass das Foliendekor 6, 14 zumindest bereichsweise eine mit dem Plattendekor 3 übereinstimmende oder identische Oberflächenstruktur einer Holzoberfläche aufweisen kann. Diese Oberflächenstruktur kann durch Durchdrücken der Dekorklebefolie 5, 13 beim Aufkleben auf eine Bodenbelagsplatte 2 entstehen und damit im Wesentlichen mit der Oberflächenstruktur der Bodenbelagsplatte 2 übereinstimmen.

### Bezugszeichenliste:

| | | | |
|---|---|---|---|
| 1 | Bodenbelag | 10 | Schicht |
| 2 | Bodenbelagsplatte | 11 | Schicht |
| 3 | Plattendekor | 12 | Dekorpapier |
| 4 | Plattendekor | 13 | Dekorklebefolie |
| 5 | Dekorklebefolie | 14 | Foliendekor |
| 6 | Foliendekor | 15 | Folienbild |
| 7 | Schicht | 16 | Bereich |
| 8 | Schicht | 17 | Bereich |
| 9 | Schicht | | |

## Patentansprüche

1. Dekorsystem für einen Boden-, Wand- oder Deckenbelag (1) oder für ein Möbelbauteil, mit wenigstens einer Platte (2), vorzugsweise einer Bodenbelags-, Wandverkleidungs- oder Deckenverkleidungsplatte, insbesondere einem Paneel- oder Dielenelement, oder einer Möbelbauteilplatte, und mit wenigstens einer Dekorklebefolie (5, 13), wobei die Dekorklebefolie (5, 13) ein Foliendekor (6, 14) aufweist, wobei das Foliendekor (6, 14) zumindest bereichsweise und zumindest in einem Dekormerkmal zumindest dekorgleich mit dem Plattendekor (3) ist, wobei das Plattendekor (3) durch Bedrucken eines Dekorrohpapiers in einem Tiefdruckverfahren oder in einem digitalen Druckverfahren erzeugt ist,
**dadurch gekennzeichnet,**
**dass** das Foliendekor (6, 14) durch Bedrucken eines nicht vollständig oder vollständig durchimprägnierten Dekorpapiers in einem digitalen Druckverfahren erzeugt ist und die Dekorklebefolie (5, 13) zur Beseitigung von Beschädigungen eines Plattendekors (3) der Platte (2) durch Überkleben ausgebildet ist.

2. Dekorsystem nach Anspruch 1, **dadurch gekennzeichnet, dass** das Foliendekor (6, 14) und das Plattendekor (3) zumindest bereichsweise ein identisches Dekorbild aufweisen, insbesondere das Dekorbild einer Holzoberfläche.

3. Dekorsystem nach Anspruch 1 oder 2, **dadurch gekennzeichnet, dass** Foliendekor (6, 14) zumindest bereichsweise eine mit dem Plattendekor (3) übereinstimmende, vorzugsweise identische, Oberflächenstruktur aufweist, insbesondere die Oberflächenstruktur einer Holzoberfläche.

4. Dekorsystem nach einem der vorhergehenden Ansprüche, **dadurch gekennzeichnet, dass** das Foliendekor (6, 14) über wenigstens 10%, vorzugsweise wenigstens 25%, insbesondere wenigstens 40%, der Grundfläche der Dekorklebefolie (5, 13) dekorgleich mit dem Plattendekor (3) ist.

5. Dekorsystem nach einem der vorhergehenden Ansprüche, **dadurch gekennzeichnet, dass** die Platte (2) und die Dekorklebefolie (5, 13) formatgleich sind.

6. Dekorsystem nach einem der vorhergehenden Ansprüche, **dadurch gekennzeichnet, dass** die Beständigkeit der Dekorklebefolie (5, 13) gegen Abrieb einer Abriebklasse nach DIN EN 13329 von wenigstens AC 1, vorzugsweise von wenigstens AC 2, zuzuordnen ist.

7. Dekorsystem nach einem der vorhergehenden Ansprüche, **dadurch gekennzeichnet, dass** die Dekorklebefolie (5, 13) ein bedrucktes Dekorpapier, eine Kunststofffolie und, vorzugsweise, eine Funktionsschicht auf dem bedruckten Papier, weiter vorzugsweise ausgebildet als Transparentfolie oder Lackschicht, aufweist.

8. Dekorsystem nach einem der vorhergehenden Ansprüche, **dadurch gekennzeichnet, dass** die Platte (2) und die Dekorklebefolie (5, 13) bedruckte Papiere mit einem identischen Dekorbild aufweisen.

9. Dekorsystem nach einem der vorhergehenden Ansprüche, **dadurch gekennzeichnet, dass** die Platte (2) und die Dekorklebefolie (5, 13) identische Dekorpapiere aufweisen.

10. Dekorsystem nach einem der vorhergehenden Ansprüche, wobei das Plattendekor (3) und das Foliendekor (6, 14) mit unterschiedlichen Fertigungsverfahren erzeugt sind.

11. Boden-, Wand- oder Deckenbelag (1) oder Möbelbauteil, mit einer Mehrzahl von flächig miteinander verbundenen Platten (2), wie Bodenbelags-, Wandverkleidungs- oder Deckenverkleidungsplatten oder Möbelbauteilplatten, erhalten unter Verwendung eines Dekorsystems nach einem der vorhergehenden Ansprüche, wobei wenigstens eine Platte (2) vorzugsweise vollflächig mit einer Dekorklebefolie (5, 13) nach einem der vorhergehenden Ansprüche beklebt ist und wobei ein Plattendekor (3) von wenigstens einer Platte (2) und ein Foliendekor (6, 14) der Dekorklebefolie (5, 12) zumindest bereichsweise und zumindest in einem Dekormerkmal dekorgleich oder dekoridentisch sind.

## Claims

1. A decorative system for a floor, wall or ceiling covering (1) or for a furniture component, comprising at least one panel (2), preferably a floor covering panel, wall cladding panel or ceiling cladding panel, in particular a panel or board element, or a furniture component panel, and comprising at least one decorative adhesive film (5, 13), wherein the decorative adhesive film (5, 13) has a film decoration (6, 14), wherein the film decoration (6, 14) is at least decoratively the same as the panel decoration (3) at least in some regions and at least in one decorative feature, wherein the panel decoration (3) is produced by printing a decorative base paper in an intaglio printing method or in a digital printing method,
**characterised in that**
the film decoration (6, 14) is produced in a digital printing method by printing a decorative paper which is not completely impregnated or completely impregnated, and the decorative adhesive film (5, 13) is formed by overbonding in order to eliminate damage to a panel decoration (3) of the panel (2).

2. The decorative system according to claim 1, **characterised in that** the film decoration (6, 14) and the panel decoration (3) have an identical decorative image at least in some regions, in particular the decorative image of a wood surface.

3. The decorative system according to claim 1 or 2, **characterised in that** the film decoration (6, 14) has, at least in some regions, a surface structure, in particular the surface structure of a wooden surface, which matches the panel decoration (3) and is preferably identical.

4. The decorative system according to one of the preceding claims, **characterised in that** the film decoration (6, 14) over at least 10%, preferably at least 25%, in particular at least 40%, of the base surface of the decorative adhesive film (5,13) is decoratively the same as the panel decoration (3).

5. The decorative system according to one of the preceding claims, **characterised in that** the panel (2) and the decorative adhesive film (5, 13) are the same size.

6. The decorative system according to one of the preceding claims, **characterised in that** the resistance of the decorative adhesive film (5, 13) to abrasion is to be assigned to an abrasion class, according to DIN EN 13329, of at least AC 1, preferably of at least AC 2.

7. The decorative system according to one of the preceding claims, **characterised in that** the decorative adhesive film (5, 13) has a printed decorative paper, a plastic film and, preferably, has a functional layer on the printed paper, further preferably in the form of a transparent film or lacquer layer.

8. The decorative system according to one of the preceding claims, **characterised in that** the panel (2) and the decorative adhesive film (5, 13) comprise printed papers having an identical decorative image.

9. The decorative system according to one of the preceding claims, **characterised in that** the panel (2) and the decorative adhesive film (5, 13) have identical decorative papers.

10. The decorative system according to one of the preceding claims, wherein the panel decoration (3) and the film decoration (6, 14) are produced using different production methods.

11. The floor, wall or ceiling covering (1) or furniture component, comprising a plurality of panels (2) which are connected to one another in a planar manner as floor covering panels, wall cladding panels or ceiling cladding panels or furniture component panels, achieved using a decorative system according to one of the preceding claims, wherein at least one panel (2) is bonded preferably over the entire surface with a decorative adhesive film (5, 13) according to one of the preceding claims, and wherein a panel decoration (3) of at least one panel (2) and a film decoration (6, 14) of the decorative adhesive film (5, 12) are decoratively the same or decoratively identical at least in some regions and at least in one decorative feature.

## Revendications

1. Système de décor pour un revêtement (1) de sol, de mur ou de plafond ou pour un composant de meuble, comprenant au moins une plaque (2), de préférence une plaque d'habillage de plafond, d'habillage de mur ou de revêtement de sol, en particulier un élément de lambris ou de lame ou une plaque de composant de meuble et comprenant au moins une feuille adhésive de décor (5, 13), dans lequel la feuille adhésive de décor (5, 13) présente un décor de feuille (6, 14), dans lequel le décor de feuille (6, 14) présente au moins par endroits et au moins dans une caractéristique de décor au moins un décor similaire au décor de plaque (3), le décor de plaque (3) étant produit par impression d'un papier de base de décor dans un procédé d'héliogravure ou dans un procédé d'impression numérique,
**caractérisé en ce**
**que** le décor de feuille (6, 14) est produit par impression d'un papier de décor totalement ou partiellement imprégné dans un procédé d'impression numérique et la feuille adhésive de décor (5, 13) est formée pour réparation des détériorations d'un décor de plaque (3) de la plaque (2) par superposition par collage.

2. Système de décor selon la revendication 1, **caractérisé en ce que** le décor de feuille (6, 14) et le décor de plaque (3) présentent au moins par endroits une image de décor identique, en particulier l'image de décor d'une surface en bois.

3. Système de décor selon la revendication 1 ou 2, **caractérisé en ce que** le décor de feuille (6, 14) présente une structure de surface concordante, de préférence identique, à celle du décor de plaque (3), au moins par endroits, en particulier la structure de surface d'une surface en bois.

4. Système de décor selon une des revendications précédentes, **caractérisé en ce que** le décor de feuille (6, 14) présente un décor similaire au décor de plaque (3) sur au moins 10 %, de préférence au moins 25 %, en particulier au moins 40 % de la surface de base de la feuille adhésive de décor (5, 13).

5. Système de décor selon une des revendications précédentes, **caractérisée en ce que** la plaque (2) et la feuille adhésive de décor (5, 13) sont d'un même format.

6. Système de décor selon une des revendications précédentes, **caractérisé en ce que** la résistance de la feuille adhésive de décor (5, 13) à l'abrasion doit être désignée selon la norme DIN EN 13329 par une classe d'abrasion d'au moins AC 1, de préférence d'au moins AC 2.

7. Système de décor selon une des revendications précédentes, **caractérisé en ce que** la feuille adhésive de décor (5, 13) présente un papier de décor imprimé, une feuille de plastique et, de préférence, une couche fonctionnelle sur le papier imprimé, plus préférablement formée comme une feuille transparente ou une couche de vernis.

8. Système de décor selon une des revendications précédentes, **caractérisée en ce que** la plaque (2) et la feuille adhésive de décor (5, 13) présentent des papiers imprimés avec une image de décor identique.

9. Système de décor selon une des revendications précédentes, **caractérisée en ce que** la plaque (2) et la feuille adhésive de décor (5, 13) présentent des papiers de décor identiques.

10. Système de décor selon une des revendications précédentes, dans lequel le décor de plaque (3) et le décor de feuille (6, 14) sont fabriqués avec des procédés de fabrication différents.

11. Revêtement de sol, de mur ou de plafond (1) ou composant de meuble, présentant une pluralité de plaques (2) reliées à fleur les unes aux autres, comme des plaques d'habillage de plafond, d'habillage de mur ou de revêtement de sol ou des plaques de composant de meuble, obtenu par l'utilisation d'un système de décor selon une des revendications précédentes, dans lequel une feuille adhésive de décor (5, 13) selon une des revendications précédentes est collée sur au moins une plaque (2) de préférence sur toute la surface et dans lequel un décor de plaque (3) d'au moins une plaque (2) et un décor de feuille (6, 14) de la feuille adhésive de décor (5, 12) présentent un décor similaire ou identique au moins par endroits et au moins dans une caractéristique de décor. least in one decorative feature.
